# FASCICULE DE BREVET EUROPEEN

(11) **EP 1 600 838 B1**
(45) Date de publication et mention de la délivrance du brevet: **12.08.2009**
(21) Numéro de dépôt: 05290751.6
(22) Date de dépôt: 06.04.2005
(51) Int. Cl.: G05D 1/02, G05D 1/04

(54) **Procédé et dispositif de sécurisation d'un vol à basse altitude d'un aéronef**
Verfahren und Vorrichtung zur Sicherung eines Tiefflugs eines Flugzeuges
Method and apparatus for securing low altitude flight of an aircraft

(30) Priorité: 18.05.2004 FR 0405380
(43) Date de publication de la demande: 30.11.2005
(73) Titulaire: AIRBUS France, 31060 Toulouse (FR)
(72) Inventeur: Artini, Franck, 31000 Toulouse (FR); Espinasse, Jacques, 31820 Pibrac (FR)
(74) Mandataire: Hauer, Bernard

(56) Documents cités:
- EP-A- 0 453 327
- WO-A-20/04079400
- GB-A- 2 266 286
- US-A- 5 922 031
- US-A1- 2001 013 836
- US-A1- 2003 036 828
- US-B1- 6 438 492

## Description

La présente invention concerne un procédé et un dispositif de sécurisation d'un vol à basse altitude d'un aéronef qui est guidé le long d'une trajectoire de vol comprenant une trajectoire latérale et une trajectoire verticale.

Bien que non exclusivement, la présente invention s'applique plus particulièrement à un avion de transport militaire qui présente un faible rapport poussée/poids et une forte inertie, et dont les temps de manoeuvre sont en général relativement lents.

Dans le cadre de la présente invention, on entend par vol à basse altitude le vol le long d'une trajectoire de vol (à basse altitude) permettant à un aéronef de suivre au plus près le terrain survolé, notamment pour éviter de se faire repérer. Une telle trajectoire de vol à basse altitude est donc située à une hauteur du terrain prédéterminée, par exemple 500 pieds (environ 150 mètres).

En raison de cette proximité avec le sol, toute déviation latérale ou verticale vers le bas (au-delà d'une certaine marge de sécurité) de l'aéronef, par rapport à la trajectoire de vol à suivre, lors du guidage de l'aéronef le long de ladite trajectoire de vol, présente un risque important de collision avec le terrain survolé (directement avec le sol ou avec un ouvrage ou un élément situé sur ledit sol). Bien entendu, l'existence d'un tel risque n'est pas acceptable.

L'état de la technique divulguant le préambule des revendications indépendantes 1 et 10 est illustré par le document US 2003/036828 A1.

La présente invention a pour objet de remédier à cet inconvénient. Elle concerne un procédé de sécurisation d'un vol à basse altitude d'un aéronef (qui est guidé le long d'une trajectoire de vol comprenant une trajectoire latérale et une trajectoire verticale), qui permet de rendre hautement improbable toute collision de l'aéronef avec le terrain survolé.

A cet effet, selon l'invention, ledit procédé est remarquable en ce que :
- on détermine un corridor de sécurité, exempt de tout obstacle, qui est délimité de part et d'autre de ladite trajectoire latérale, et dont la largeur dépend d'une incertitude globale ; et
- on guide l'aéronef le long de ladite trajectoire de vol, en évitant toute sortie de cet aéronef dudit corridor de sécurité.

Ainsi, comme le corridor de sécurité est exempt de tout obstacle (en raison de caractéristiques précisées ci-dessous), notamment de toute partie de terrain telle qu'une crête par exemple, le risque de collision pour l'aéronef lors du vol à basse altitude le long de ladite trajectoire de vol est minimisé, tant que ledit aéronef reste dans ce corridor de sécurité.

Avantageusement, ladite incertitude globale dépend :
- d'une incertitude concernant la position de l'aéronef ;
- d'une incertitude concernant un profil de terrain utilisé pour construire ladite trajectoire de vol ; et
- d'une incertitude concernant le guidage de l'aéronef le long d'une trajectoire.

Dans un mode de réalisation particulier, ledit corridor de sécurité est délimité, dans le plan vertical, vers le bas, par la partie la plus haute du terrain existant sous une surface d'incertitude (ou surface d'extraction d'un profil de terrain sécurisé). De préférence, cette surface d'incertitude dépend également :
- d'une incertitude concernant la position de l'aéronef ;
- d'une incertitude concernant un profil de terrain utilisé pour construire ladite trajectoire de vol ; et
- d'une incertitude concernant le guidage de l'aéronef le long d'une trajectoire.

En outre, avantageusement, ladite surface d'incertitude présente la largeur dudit corridor de sécurité.

Dans un mode de réalisation préféré, on détermine, de plus, un corridor opérationnel qui délimite un volume d'évolution normal de l'aéronef défini autour de la trajectoire de vol, à la fois dans un plan vertical et dans un plan horizontal, et qui est tel qu'une sortie de l'aéronef dudit corridor opérationnel est rattrapable par un pilotage (manuel ou automatique) de l'aéronef, avant une sortie dudit aéronef du corridor de sécurité.

Grâce audit corridor opérationnel et à un pilotage de rattrapage si nécessaire, on est en mesure d'anticiper toute sortie de l'aéronef dudit corridor de sécurité, et donc de minimiser le risque de collision de l'aéronef avec le terrain. Le vol à basse altitude de l'aéronef est donc sécurisé.

De façon avantageuse, lors du guidage de l'aéronef le long de la trajectoire de vol :
- on vérifie que l'aéronef se trouve à l'intérieur du corridor opérationnel ; et
- on émet, le cas échéant, un signal d'alarme de sortie de l'aéronef dudit corridor opérationnel.

Dans un but de sécurisation maximale, avantageusement, ledit signal d'alarme est émis de façon anticipée, avant la sortie effective de l'aéronef dudit corridor opérationnel.

Dans ce cas, premièrement, pour une sortie du corridor opérationnel correspondant à une déviation latérale excessive par rapport à la trajectoire latérale, l'émission anticipée du signal d'alarme tient compte, de façon avantageuse :
- de l'écart de route de l'aéronef par rapport à ladite trajectoire latérale ;
- de la valeur de l'accélération horizontale de l'aéronef, projetée sur un axe perpendiculaire à ladite trajectoire latérale ; et
- de la vitesse horizontale de l'aéronef, projetée sur ledit axe.

De plus, deuxièmement, pour une sortie du corridor opérationnel correspondant à une déviation verticale excessive par rapport à la trajectoire verticale, l'émission anticipée du signal d'alarme tient compte, de façon avantageuse :
- de l'écart de pente de l'aéronef par rapport à la pente de ladite trajectoire verticale ;
- de la valeur de l'accélération verticale de l'aéronef, projetée sur un axe perpendiculaire à ladite trajectoire verticale ; et
- de la vitesse verticale de l'aéronef, projetée sur ledit axe.

La présente invention concerne également un dispositif de sécurisation d'un vol à basse altitude d'un aéronef.

Selon l'invention, ledit dispositif du type comportant :
- des premiers moyens pour déterminer une trajectoire de vol comprenant une trajectoire latérale et une trajectoire verticale ; et
- des moyens de guidage et de navigation pour guider l'aéronef le long de ladite trajectoire de vol, comprenant également des moyens de navigation (position, vitesse, accélération de l'aéronef),
est remarquable en ce qu'il comporte de plus :
- des deuxièmes moyens pour déterminer un corridor de sécurité, exempt de tout obstacle, qui est limité de part et d'autre de ladite trajectoire latérale (et qui est limité vers le bas par la crête la plus haute d'un profil de terrain sécurisé sous la surface d'incertitude, pour l'abscisse considérée de la trajectoire latérale) ; et
- des troisièmes moyens pour éviter toute sortie de l'aéronef dudit corridor de sécurité, lors de son guidage le long de ladite trajectoire de vol.

Ledit dispositif conforme à l'invention permet donc de minimiser le risque de collision de l'aéronef avec un obstacle et ainsi de sécuriser le vol à basse altitude.

Dans un mode de réalisation particulier, lesdits troisièmes moyens comportent :
- des moyens pour déterminer un corridor opérationnel ;
- des moyens pour vérifier que l'aéronef se trouve à l'intérieur dudit corridor opérationnel, lors de son guidage le long de ladite trajectoire de vol ;
- des moyens pour émettre le cas échéant un signal d'alarme de sortie de l'aéronef dudit corridor opérationnel ; et
- des moyens de pilotage permettant de ramener l'aéronef à l'intérieur dudit corridor opérationnel lors de l'émission d'un signal d'alarme.

Les figures du dessin annexé feront bien comprendre comment l'invention peut être réalisée. Sur ces figures, des références identiques désignent des éléments semblables.
La figure 1 est le schéma synoptique d'un dispositif conforme à l'invention.
Les figures 2 et 3 illustrent schématiquement des caractéristiques de l'invention, respectivement dans un plan horizontal et dans un plan vertical.
Les figures 4 et 5 montrent des déviations excessives respectivement dans un plan vertical et un plan horizontal, entraînant une manoeuvre de recouvrement.

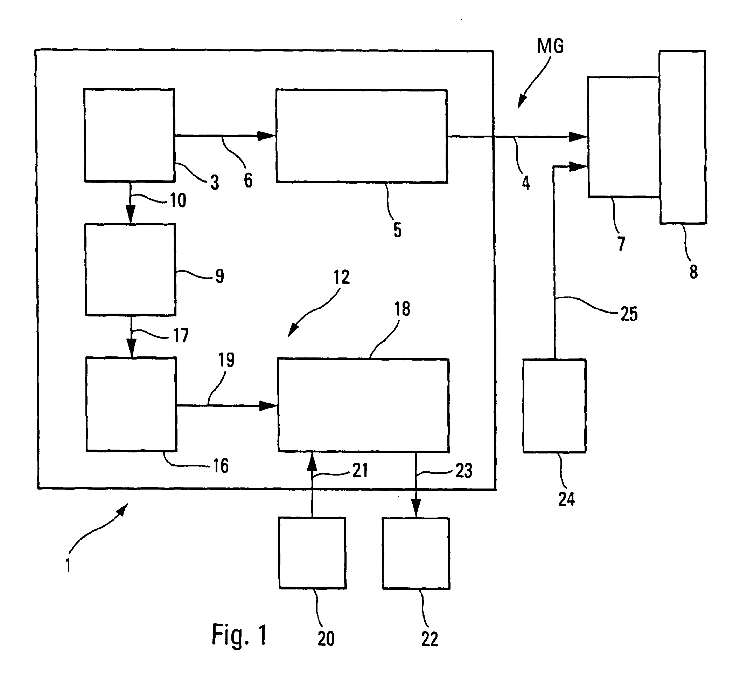

Le dispositif 1 conforme à l'invention et représenté schématiquement sur la figure 1 est destiné à sécuriser le vol à basse altitude d'un aéronef A, en particulier un avion de transport militaire.

Pour ce faire, ledit dispositif 1 est du type comportant :
- des moyens 3 usuels, pour déterminer une trajectoire de vol TO comprenant une trajectoire latérale TL définie dans un plan horizontal et une trajectoire verticale TV (ou profil de vol) définie dans un plan vertical. Pour pouvoir réaliser un vol à basse altitude, la trajectoire de vol TO (à basse altitude) doit permettre à l'aéronef A de suivre au plus près le terrain survolé 2 ; et
- des moyens de guidage et de navigation MG usuels pour guider l'aéronef A le long de ladite trajectoire de vol TO. Dans un mode de réalisation préféré, lesdits moyens de guidage MG comportent :
   ■ des moyens 5, par exemple un pilote automatique, qui sont reliés par une liaison 6 auxdits moyens 3 pour déterminer des ordres de pilotage de l'aéronef A de sorte qu'il suive ladite trajectoire de vol TO ; et
   ■ des moyens d'actionnement 7 d'organes commandés 8 tels que par exemple des gouvernes (de direction, de profondeur, ...) de l'aéronef A, moyens d'actionnement 7 qui sont reliés par une liaison 4 auxdits moyens 5 et auxquels on applique les ordres de pilotage déterminés par ces derniers.

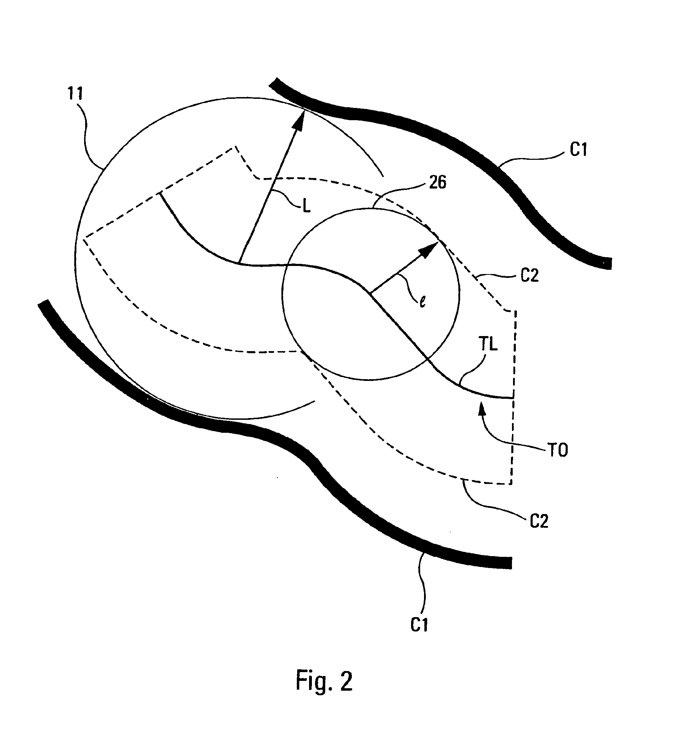

Selon l'invention, ledit dispositif 1 comporte de plus :
- des moyens 9 qui sont reliés par une liaison 10 audit moyen 3, pour déterminer un corridor de sécurité C1, qui est exempt de tout obstacle (en raison de caractéristiques précisées ci-dessous), qui est délimité de part et d'autre de ladite trajectoire latérale TL, et dont la largeur 2L (qui est représentée sur la figure 2 comme double du rayon L d'un cercle 11) dépend d'une incertitude globale (et qui reflète la probabilité maximale que l'on veut assigner à l'événement correspondant à la sortie du corridor de sécurité) ; et
- des moyens 12 précisés ci-dessous, pour éviter toute sortie de l'aéronef A dudit corridor de sécurité C1, lors de son guidage le long de ladite trajectoire de vol TO.

Ainsi, comme le corridor de sécurité C1 est exempt par définition de tout obstacle, notamment de toute partie de terrain 2 telle qu'une crête par exemple, le risque de collision pour l'aéronef A lors du vol à basse altitude le long de ladite trajectoire de vol TO est minimisé, tant que ledit aéronef A est maintenu dans ce corridor de sécurité C1 grâce à l'action desdits moyens 12.

Pour déterminer ce corridor de sécurité C1, lesdits moyens 9 tiennent compte d'une pluralité d'incertitudes existant lors d'un vol à basse altitude, qui sont regroupées en une incertitude globale. Plus précisément, selon l'invention, cette incertitude globale tient compte notamment :
- d'une incertitude concernant la position de l'aéronef A ;
- d'une incertitude concernant un profil de terrain utilisé pour construire ladite trajectoire de vol TO ; et
- d'une incertitude concernant le guidage de l'aéronef A le long d'une trajectoire.

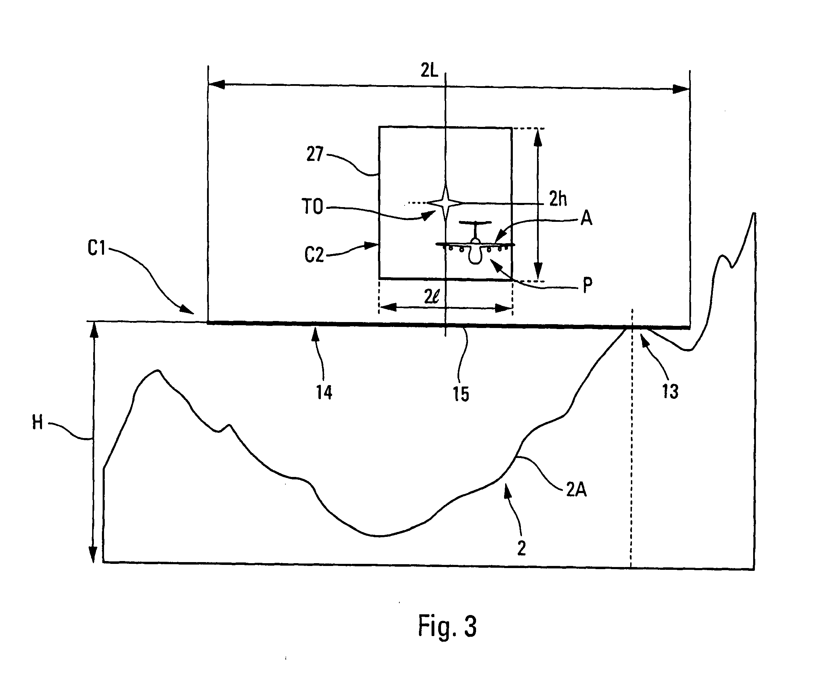

Sur la figure 2, on a représenté le corridor de sécurité C1 dans un plan horizontal, et sur la figure 3 dans un plan vertical.

Dans le plan vertical, ledit corridor de sécurité C1 n'est pas délimité vers le haut, mais il est délimité vers le bas, par la partie la plus haute 13 du terrain 2 (dont on a représenté le relief 2A sur la figure 3) qui existe sous une surface d'incertitude 14 horizontale (ou surface d'extraction d'un profil de terrain sécurisé). Cette partie 13 présente une altitude H. Dans un mode de réalisation préféré, ladite surface d'incertitude 14 est déterminée, en tenant notamment compte des incertitudes précitées, à savoir :
- l'incertitude concernant la position de l'aéronef A ;
- l'incertitude concernant un profil de terrain (numérique) utilisé pour construire ladite trajectoire de vol TO ; et
- l'incertitude concernant le guidage de l'aéronef A le long d'une trajectoire.

Ladite surface d'incertitude 14 qui est une surface horizontale est centrée par rapport à la trajectoire latérale TL de la trajectoire de vol TO. Elle peut présenter notamment une forme carrée, rectangulaire ou allongée dans la direction de ladite trajectoire latérale TL (en fonction des incertitudes dans les différentes directions latérales et le long de la trajectoire).

De préférence, elle présente la largeur 2L du corridor de sécurité C 1. Ainsi, dans la représentation de la figure 3 qui correspond à cette dernière situation, le corridor de sécurité C1 et la surface d'incertitude 14 sont représentés par un même segment de droite 15.

Dans un mode de réalisation préféré, lesdits moyens 3 déterminent la trajectoire verticale TV (ou profil de vol) de la trajectoire de vol TO, non pas directement à partir du profil de terrain qui est par exemple issu d'une base de données numérique et qui présente une certaine marge d'erreur, mais à partir d'un profil de terrain sécurisé qui tient compte d'une pluralité de marges d'erreur ou incertitudes existantes, dont celle relative à la précision de la base de données. Ceci permet d'obtenir une trajectoire verticale TV éliminant tout risque de collision de l'aéronef A avec le sol, tout en autorisant un suivi du terrain 2 à basse altitude. Pour ce faire, lesdits moyens 3 déterminent, à partir du profil de terrain reçu de la base de données numérique, un profil de terrain sécurisé qui est tel que, le long de ladite trajectoire latérale TL, on prend en compte comme élévation du terrain, l'élévation 13 qui est la plus haute sous la surface d'incertitude 14 précitée (ou surface d'extraction d'un profil de terrain sécurisé) de manière à former un profil auxiliaire auquel on ajoute une hauteur de garde prédéterminée, par exemple 500 pieds (environ 150 mètres), pour obtenir ledit profil de terrain sécurisé.

Lesdits moyens de guidage MG comportent également des moyens de navigation qui fournissent l'incertitude de positionnement de l'aéronef A, associée à la probabilité demandée. Par exemple, ils peuvent fournir une surface (d'incertitude) qui donne la position de l'aéronef A dans cette surface avec une probabilité de 10⁻⁹ risque de collision par heure de vol.

En outre, selon l'invention, lesdits moyens 12 comportent :
- des moyens 16 qui sont reliés par une liaison 17 aux moyens 9, pour déterminer un corridor opérationnel C2 qui est prévu à l'intérieur dudit corridor de sécurité C1, qui délimite un volume normal d'évolution de l'aéronef A défini autour de la trajectoire de vol TO, à la fois dans un plan vertical et dans un plan horizontal, et qui est tel qu'une sortie de l'aéronef A dudit corridor opérationnel C2 est rattrapable par un pilotage de l'aéronef A, avant une sortie dudit aéronef A du corridor de sécurité C1 ;
- des moyens 18 qui sont reliés par une liaison 19 auxdits moyens 16, pour vérifier que l'aéronef A se trouve à l'intérieur dudit corridor opérationnel C2, lors de son guidage le long de ladite trajectoire de vol TO. Pour ce faire, lesdits moyens 18 reçoivent des informations concernant l'aéronef A, et notamment sa position, d'une source d'informations 20 usuelle qui est reliée par une liaison 21 auxdits moyens 18 ;
- des moyens 22 qui sont reliés par une liaison 23 auxdits moyens 18 pour émettre, en particulier au niveau du poste de pilotage de l'aéronef A, le cas échéant un signal d'alarme, par exemple de type sonore et/ou de type visuel, indiquant une sortie de l'aéronef A dudit corridor opérationnel C2 ; et
- des moyens de pilotage 24 usuels, permettant de ramener l'aéronef A à l'intérieur dudit corridor opérationnel C2 lors de l'émission d'un signal d'alarme, en engendrant des ordres de pilotage qui sont transmis par une liaison 25 auxdits moyens d'actionnement 7.

Lesdits moyens de pilotage 24 peuvent être des moyens de pilotage automatique, par exemple un pilote automatique de type usuel. Toutefois, dans un mode de réalisation préféré, lesdits moyens de pilotage 24 sont des moyens de pilotage manuels usuels, qui permettent à un pilote de l'aéronef A de réaliser par un pilotage manuel, le cas échéant, la manceuvre de rattrapage ou recouvrement nécessaire de la trajectoire de vol TO.

Dans le plan horizontal, le corridor opérationnel C2 est défini de part et d'autre de la trajectoire latérale TL, comme représenté sur la figure 2. Il présente une largeur 2ℓ qui est illustrée comme double du rayon ℓ d'un cercle 26.

Dans le plan vertical, le corridor C2 est présenté sous forme d'un rectangle 27 de largeur 2ℓ et de hauteur 2h, centré sur la trajectoire de vol TO, comme représenté sur la figure 3.

Sur cette figure 3, on a de plus représenté l'aéronef A, dont la position P (entachée éventuellement d'une erreur de navigation) est située à l'intérieur dudit corridor opérationnel C2.

Ledit corridor opérationnel C2 illustre donc le volume d'évolution normale de l'aéronef A en fonction de ses performances (performances de navigation et de guidage). Une sortie de ce corridor opérationnel C2 qui est inclus dans le corridor de sécurité C1 est donc signalée au pilote. Le pilote sait qu'en utilisation normale, en raison des performances de l'aéronef A, il peut alors ramener ce dernier manuellement dans le corridor opérationnel C2, sans que la manoeuvre de recouvrement l'amène à sortir dudit corridor de sécurité C1.

On notera que :
- comme indiqué précédemment, le corridor de sécurité C1 n'est pas limité vers le haut, et sa limite basse est le relief 2A (sa partie la plus haute 13) ; et
- le corridor opérationnel C2 peut lui aussi ne pas être limité vers le haut, mais il est judicieux de signaler au pilote tout écart excessif vers le haut, puisque dans ce cas, notamment les moyens 5 ne se comportent pas normalement.

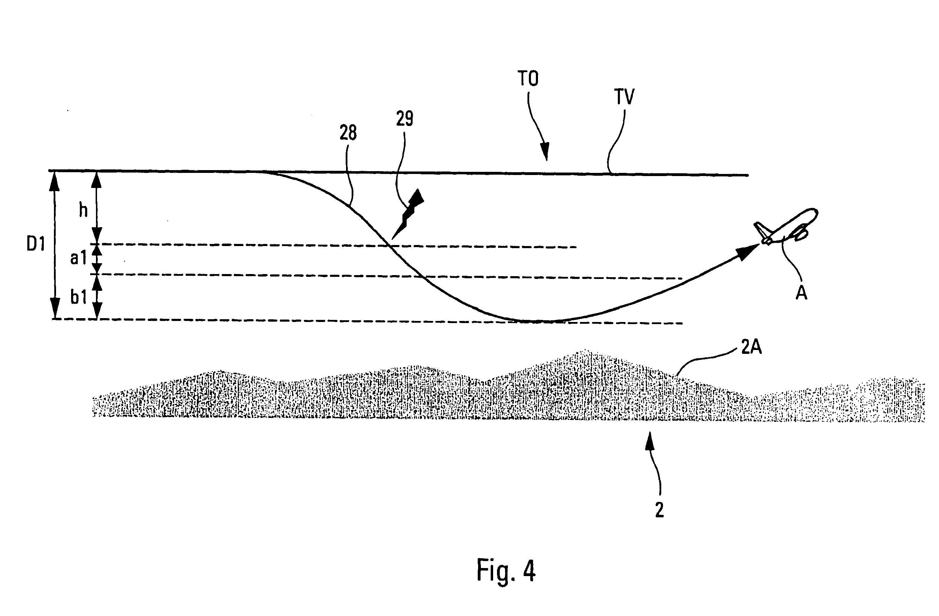

Sur la figure 4, on a représenté une sortie de l'aéronef A du corridor opérationnel C2, correspondant à une déviation verticale excessive (vers le bas) par rapport à la trajectoire verticale TV. Cette sortie est illustrée par la représentation de la trajectoire 28 correspondante de l'aéronef A.

Après une déviation verticale excessive d'une hauteur h, l'aéronef A sort du corridor opérationnel C2, ce qui entraîne l'émission d'un signal d'alarme 29 par les moyens 22 avertissant le pilote de cette sortie. Le temps que ce dernier réagisse, l'aéronef A descend encore d'une hauteur a1, et puis d'une hauteur b1, pendant le temps de la manoeuvre de recouvrement. En définitive, l'aéronef A s'est écarté d'une hauteur D1 de la trajectoire verticale TV : D1=h+a1+b1. Il convient donc pour des raisons de sécurité que la trajectoire verticale TV se trouve au minimum à une hauteur D1 au-dessus du point le plus haut du relief 2A du terrain 2.

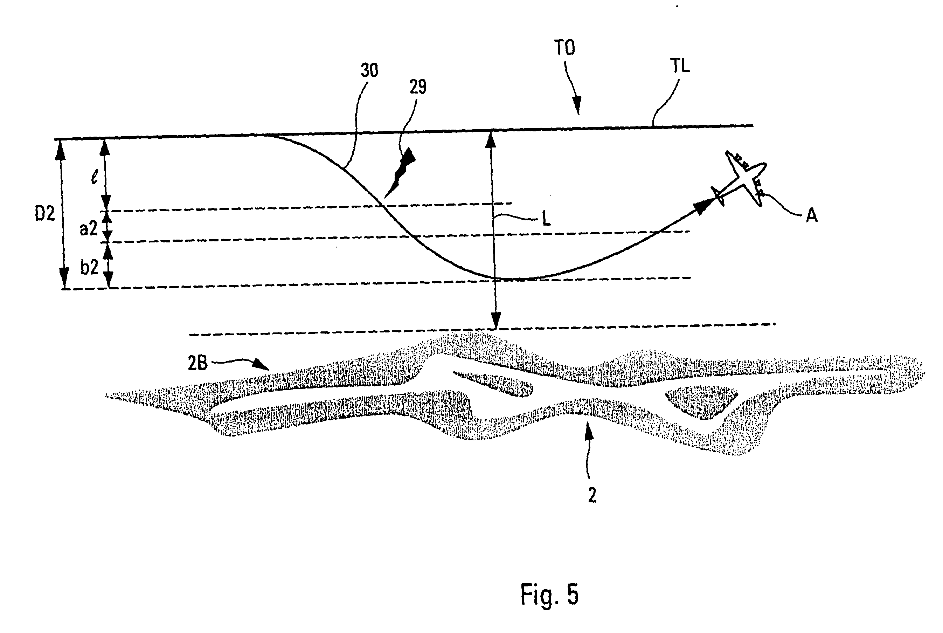

En outre, on a représenté sur la figure 5 une sortie de l'aéronef A du corridor opérationnel C2, correspondant à une déviation latérale excessive par rapport à la trajectoire latérale TL. Cette sortie est illustrée par la représentation de la trajectoire 30 correspondante de l'aéronef A. On a de plus représenté une étendue latérale 2B dudit terrain 2.

Après une déviation latérale excessive d'une distance ℓ, l'aéronef A sort du corridor opérationnel C2, ce qui entraîne l'émission d'un signal d'alarme 29 par les moyens 22 avertissant le pilote de cette sortie. Le temps que ce dernier réagisse, l'aéronef A s'écarte d'une distance a2, et puis d'une distance b2, pendant le temps de la manoeuvre de recouvrement. En définitive, l'aéronef A s'est écarté latéralement d'une distance D2 de la trajectoire latérale TL : D2 = ℓ + a2 + b2. Comme cette distance D2 reste très inférieure à la largeur L du corridor de sécurité C1, le vol correspondant (avec la manoeuvre de recouvrement) reste sécurisé.

Par conséquent, tant que l'aéronef A reste dans le corridor de sécurité C1, son vol à basse altitude est sécurisé. De plus, avant d'arriver à une sortie de l'aéronef A dudit corridor de sécurité C1, pour laquelle la sécurité du vol à basse altitude ne serait plus assurée dans le plan horizontal, un signal d'alarme 29 est engendré lorsque l'aéronef A se trouve en dehors d'un corridor normal d'utilisation (ledit corridor opérationnel C2) qui est dimensionné de manière à ce qu'une manoeuvre de recouvrement permette de conserver l'aéronef A dans le couloir de sécurité C1.

Comme, de plus, un écart vers le bas est dangereux en vol à basse altitude, ce principe est étendu dans le plan vertical, vers le bas. Vers le haut, il n'existe pas de problème de sécurité, toutefois le corridor opérationnel C2 présente une limite supérieure, car une sortie vers le haut traduit un comportement anormal de l'aéronef A par rapport à la trajectoire de vol TO à suivre.

Dans un but de sécurité maximal, ledit signal d'alarme 29 est émis de façon anticipée, avant une sortie effective de l'aéronef A dudit corridor opérationnel C2.

Premièrement, pour une sortie du corridor opérationnel C2 correspondant à une déviation verticale excessive par rapport à la trajectoire verticale TV, comme représenté sur la figure 4, l'émission anticipée du signal d'alarme 29 tient compte :
- de l'écart de pente de l'aéronef A par rapport à la pente de ladite trajectoire verticale TV ;
- de la valeur de l'accélération verticale de l'aéronef A, projetée sur un axe perpendiculaire à ladite trajectoire verticale TV ; et
- de la vitesse verticale de l'aéronef A, projetée sur ledit axe.

Deuxièmement, pour une sortie du corridor opérationnel C2 correspondant à une déviation latérale excessive par rapport à la trajectoire latérale TL, comme représenté sur la figure 5, l'émission anticipée du signal d'alarme 29 tient compte :
- de l'écart de route de l'aéronef A par rapport à ladite trajectoire latérale TL ;
- de la valeur de l'accélération horizontale de l'aéronef A, projetée sur un axe perpendiculaire à ladite trajectoire latérale TL ; et
- de la vitesse horizontale de l'aéronef A, projetée sur ledit axe.

## Revendications

1. Procédé de sécurisation d'un vol à basse altitude d'un aéronef (A) qui est guidé le long d'une trajectoire de vol (TO) comprenant une trajectoire latérale (TL) et une trajectoire verticale (TV), procédé selon lequel :
- on détermine un corridor de sécurité (C1), exempt de tout obstacle, qui est délimité de part et d'autre de ladite trajectoire latérale (TL), et dont la largeur dépend d'une incertitude globale ; et
- on guide l'aéronef (A) le long de ladite trajectoire de vol (TO),
**caractérisé en ce que** l'on détermine, de plus, un corridor opérationnel (C2) qui délimite un volume d'évolution normale de l'aéronef (A) défini autour de la trajectoire de vol (TO), à la fois dans un plan vertical et dans un plan horizontal, et qui est tel qu'une sortie de l'aéronef (A) dudit corridor opérationnel (C2) est rattrapable par un pilotage de l'aéronef (A), avant une sortie dudit aéronef (A) du corridor de sécurité (C1).

2. Procédé selon la revendication 1,
**caractérisé en ce que** ladite incertitude globale dépend :
- d'une incertitude concernant la position de l'aéronef (A) ;
- d'une incertitude concernant un profil de terrain utilisé pour construire ladite trajectoire de vol (TO) ; et
- d'une incertitude concernant le guidage de l'aéronef (A) le long d'une trajectoire.

3. Procédé selon l'une des revendications 1 et 2,
**caractérisé en ce que** ledit corridor de sécurité (C1) est délimité, dans le plan vertical, vers le bas, par la partie la plus haute (13) du terrain (2) existant sous une surface d'incertitude (14).

4. Procédé selon la revendication 3,
**caractérisé en ce que** ladite surface d'incertitude (14) dépend :
- d'une incertitude concernant la position de l'aéronef (A) ;
- d'une incertitude concernant un profil de terrain utilisé pour construire ladite trajectoire de vol (TO) ; et
- d'une incertitude concernant le guidage de l'aéronef (A) le long d'une trajectoire.

5. Procédé selon l'une des revendications 3 et 4,
**caractérisé en ce que** ladite surface d'incertitude (14) présente la largeur dudit corridor de sécurité (C1).

6. Procédé selon l'une quelconque des revendications précédentes,
**caractérisé en ce que**, lors du guidage de l'aéronef (A) le long de la trajectoire de vol (TO) :
- on vérifie que l'aéronef (A) se trouve à l'intérieur du corridor opérationnel (C2) ; et
- lors d'une sortie de l'aéronef (A) dudit corridor opérationnel (C2) :
. on émet un signal d'alarme (29) de sortie de l'aéronef (A) dudit corridor opérationnel (C2) ; et
. on ramène l'aéronef (A) à l'intérieur dudit corridor opérationnel (C2).

7. Procédé selon la revendication 6,
**caractérisé en ce que** ledit signal d'alarme (29) est émis de façon anticipée, avant la sortie effective de l'aéronef (A) dudit corridor opérationnel (C2).

8. Procédé selon la revendication 7,
**caractérisé en ce que**, pour une sortie du corridor opérationnel (C2) correspondant à une déviation latérale excessive par rapport à la trajectoire latérale (TL), l'émission anticipée du signal d'alarme (29) tient compte :
- de l'écart de route de l'aéronef (A) par rapport à ladite trajectoire latérale (TL) ;
- de la valeur de l'accélération horizontale de l'aéronef (A), projetée sur un axe perpendiculaire à ladite trajectoire latérale (TL) ; et
- de la vitesse horizontale de l'aéronef (A), projetée sur ledit axe.

9. Procédé selon l'une des revendications 7 et 8,
**caractérisé en ce que**, pour une sortie du corridor opérationnel (C2) correspondant à une déviation verticale excessive par rapport à la trajectoire verticale (TV), l'émission anticipée du signal d'alarme (29) tient compte :
- de l'écart de pente de l'aéronef (A) par rapport à la pente de ladite trajectoire verticale (TV) ;
- de la valeur de l'accélération verticale de l'aéronef (A), projetée sur un axe perpendiculaire à ladite trajectoire verticale (TV) ; et
- de la vitesse verticale de l'aéronef (A), projetée sur ledit axe.

10. Dispositif de sécurisation d'un vol à basse altitude d'un aéronef, ledit dispositif (1) comportant :
- des premiers moyens (3) pour déterminer une trajectoire de vol (TO) comprenant une trajectoire latérale (TL) et une trajectoire verticale (TV) ;
- des deuxièmes moyens (9) pour déterminer un corridor de sécurité (C1), exempt de tout obstacle, qui est délimité de part et d'autre de ladite trajectoire latérale (TL) ; et
- des moyens de guidage (MG) pour guider l'aéronef (A) le long de ladite trajectoire de vol (TO), comprenant également des moyens de navigation,
**caractérisé en ce qu'**il comporte, de plus, des troisièmes moyens (12) pour éviter toute sortie de l'aéronef (A) dudit corridor de sécurité (C1), lors de son guidage le long de ladite trajectoire de vol (TO), et **en ce que** lesdits troisièmes moyens (12) comportent des moyens (16) pour déterminer un corridor opérationnel (C2) qui délimite un volume d'évolution normale de l'aéronef (A) défini autour de la trajectoire de vol (TO), à la fois dans un plan vertical et dans un plan horizontal, et qui est tel qu'une sortie de l'aéronef (A) dudit corridor opérationnel (C2) est rattrapable par un pilotage de l'aéronef (A), avant une sortie dudit aéronef (A) du corridor de sécurité (C1).

11. Dispositif selon la revendication 10,
**caractérisé en ce que** lesdits troisièmes moyens (12) comportent de plus :
- des moyens (18) pour vérifier que l'aéronef (A) se trouve à l'intérieur dudit corridor opérationnel (C2), lors de son guidage le long de ladite trajectoire de vol (TO) ;
- des moyens (22) pour émettre le cas échéant un signal d'alarme (29) de sortie de l'aéronef (A) dudit corridor opérationnel (C2) ; et
- des moyens de pilotage (24) permettant de ramener l'aéronef (A) à l'intérieur dudit corridor opérationnel (C2) lors de l'émission d'un signal d'alarme (29).

12. Aéronef,
**caractérisé en ce qu'**il comporte un dispositif (1) tel que celui spécifié sous l'une quelconque des revendications 10 et 11.

13. Aéronef,
**caractérisé en ce qu'**il comporte un dispositif (1) susceptible de mettre en oeuvre le procédé spécifié sous l'une quelconque des revendications 1 à 9.

## Claims

1. A method for ensuring the safety of a low-altitude flight of an aircraft (A) which is guided along a flight trajectory (TO) comprising a lateral trajectory (TL) and a vertical trajectory (TV), in which method:
- a safety corridor (C1), devoid of any obstacle, is determined which is delimited on either side of said lateral trajectory (TL), and whose width depends on a global uncertainty; and
- the aircraft (A) is guided along said flight trajectory (TO),
**characterized in that** an operational corridor (C2) is moreover determined which delimits a volume of normal deployment of the aircraft (A) defined about the flight trajectory (TO), both in a vertical plane and in a horizontal plane, and which is such that an exit of the aircraft (A) from said operational corridor (C2) is compensatable through a steering of the aircraft (A), before an exit of said aircraft (A) from the safety corridor (C1).

2. The method as claimed in claim 1,
**characterized in that** said global uncertainty depends:
- on an uncertainty relating to the position of the aircraft (A);
- on an uncertainty relating to a terrain profile used to construct said flight trajectory (TO); and
- on an uncertainty relating to the guiding of the aircraft (A) along a trajectory.

3. The method as claimed in one of claims 1 and 2,
**characterized in that** said safety corridor (C1) is delimited, in the vertical plane, at the bottom, by the highest part (13) of the terrain (2) existing under an uncertainty surface (14).

4. The method as claimed in claim 3,
**characterized in that** said uncertainty surface (14) depends:
- on an uncertainty relating to the position of the aircraft (A);
- on an uncertainty relating to a terrain profile used to construct said flight trajectory (TO); and
- on an uncertainty relating to the guiding of the aircraft (A) along a trajectory.

5. The method as claimed in one of claims 3 and 4,
**characterized in that** said uncertainty surface (14) exhibits the width of said safety corridor (C1).

6. The method as claimed in any one of the preceding claims,
**characterized in that**, during the guidance of the aircraft (A) along the flight trajectory (TO),
- a check is performed to verify whether the aircraft (A) is situated inside the operational corridor (C2); and
- during an exit of the aircraft (A) from said operational corridor (C2):
• an alarm signal (29) of exit of the aircraft (A) from said operational corridor (C2) is emitted, as appropriate; and
• the aircraft (A) is brought inside said operational (C2).

7. The method as claimed in claim 6,
**characterized in that** said alarm signal (29) is emitted in an anticipated manner, before the actual exit of the aircraft (A) from said operational corridor (C2).

8. The method as claimed in claim 7,
**characterized in that**, for an exit from the operational corridor (C2) corresponding to an excessive lateral swerve with respect to the lateral trajectory (TL), the anticipated emission of the alarm signal (29) takes account:
- of the deviation of course of the aircraft (A) with respect to said lateral trajectory (TL);
- of the value of the horizontal acceleration of the aircraft (A), projected onto an axis perpendicular to said lateral trajectory (TL); and
- of the horizontal speed of the aircraft (A), projected onto said axis.

9. The method as claimed in one of claims 7 and 8,
**characterized in that**, for an exit from the operational corridor (C2) corresponding to an excessive vertical swerve with respect to the vertical trajectory (TV), the anticipated emission of the alarm signal (29) takes account:
- of the deviation of slope of the aircraft (A) with respect to the slope of said vertical trajectory (TV);
- of the value of the vertical acceleration of the aircraft (A), projected onto an axis perpendicular to said vertical trajectory (TV); and
- of the vertical speed of the aircraft (A), projected onto said axis.

10. A device for ensuring the safety of a low-altitude flight of an aircraft, said device (1) comprising:
- first means (3) for determining a flight trajectory (TO) comprising a lateral trajectory (TL) and a vertical trajectory (TV);
- second means (9) for determining a safety corridor (C1), devoid of any obstacle, which is delimited on either side of said lateral trajectory (TL); and
- means of guidance (MG) for guiding the aircraft (A) along said flight trajectory (TO), also comprising means of navigation,
**characterized in that** it moreover comprises third means (12) for avoiding any exit of the aircraft (A) from said safety corridor (C1), during its guidance along said flight trajectory (TO), and **in that** said third means (12) comprise means (16) for determining an operational corridor (C2) which delimits a volume of normal deployment of the aircraft (A) defined about the flight trajectory (TO), both in a vertical plane and in a horizontal plane, and which is such that an exit of the aircraft (A) from said operational corridor (C2) is compensatable through a steering of the aircraft (A), before an exit of said aircraft (A) from the safety corridor (C1).

11. The device as claimed in claim 10,
**characterized in that** said third means (12) moreover comprise:
- means (18) for verifying that the aircraft (A) is situated inside said operational corridor (C2), during its guidance along said flight trajectory (TO);
- means (22) for emitting as appropriate an alarm signal (29) of exit of the aircraft (A) from said operational corridor (C2); and
- means of steering (24) making it possible to bring the aircraft (A) inside said operational corridor (C2) upon the emission of an alarm signal (29).

12. An aircraft,
**characterized in that** it comprises a device (1) such as that specified in any one of claims 10 and 11.

13. An aircraft,
**characterized in that** it comprises a device (1) capable of implementing the method as specified in any one of claims 1 to 9.

## Patentansprüche

1. Verfahren zur Sicherung eines Tiefflugs eines Flugzeugs (A), das entlang einer Flugbahn (TO) geführt wird, die eine laterale Flugbahn (TL) und eine vertikale Flugbahn (TV) umfasst, wobei bei dem Verfahren:
- ein von jeglichem Hindernis freier Sicherheitskorridor (C1) bestimmt wird, der beidseits der lateralen Flugbahn (TL) begrenzt ist und dessen Breite von einer Gesamtunsicherheit abhängt und
- das Flugzeug (A) entlang der Flugbahn (TO) geführt wird,
**dadurch gekennzeichnet, dass** außerdem ein Einsatzkorridor (C2) bestimmt wird, der ein um die Flugbahn (TO) herum definiertes Volumen für normale Manöver des Flugzeugs (A) sowohl in einer vertikalen Ebene, als auch in einer horizontalen Ebene begrenzt und der derart bestimmt ist, dass ein Herausfliegen des Flugzeugs (A) aus dem Einsatzkorridor (C2) vor einem Herausfliegen des Flugzeugs (A) aus dem Sicherheitskorridor (C1) durch ein Steuern des Flugzeugs (A) kompensierbar ist.

2. Verfahren nach Anspruch 1,
**dadurch gekennzeichnet, dass** die Gesamtunsicherheit abhängig ist von:
- einer die Position des Flugzeugs (A) betreffenden Unsicherheit,
- einer Unsicherheit bezüglich eines Geländeprofils, das zur Erzeugung der Flugbahn (TO) verwendet wird und
- einer Unsicherheit bezüglich der Führung des Flugzeugs (A) entlang einer Flugbahn.

3. Verfahren nach Anspruch 1 oder 2,
**dadurch gekennzeichnet, dass** der Sicherheitskorridor (C1) in der vertikalen Ebene nach unten vom höchsten Teil (13) des unter einer Unsicherheitsfläche (14) vorhandenen Geländes (2) begrenzt wird.

4. Verfahren nach Anspruch 3,
**dadurch gekennzeichnet, dass** die Unsicherheitsfläche (14) abhängig ist von:
- einer die Position des Flugzeugs (A) betreffenden Unsicherheit,
- einer Unsicherheit bezüglich eines Geländeprofils, das zur Erzeugung der Flugbahn (TO) verwendet wird und
- einer Unsicherheit bezüglich der Führung des Flugzeugs (A) entlang einer Flugbahn.

5. Verfahren nach Anspruch 3 oder 4,
**dadurch gekennzeichnet, dass** die Unsicherheitsfläche (14) die Breite des Sicherheitskorridors (C1) aufweist.

6. Verfahren nach einem der vorhergehenden Ansprüche,
**dadurch gekennzeichnet, dass** während der Führung des Flugzeugs (A) entlang der Flugbahn (TO):
- verifiziert wird, dass das Flugzeug (A) sich innerhalb des Einsatzkorridors (C2) befindet und
- bei einem Herausfliegen des Flugzeugs (A) aus dem Einsatzkorridor (C2):
• ein vor dem Herausfliegen des Flugzeugs (A) aus dem Einsatzkorridor (C2) warnendes Signal (29) abgegeben wird und
• das Flugzeug (A) in das Innere des Einsatzkorridors (C2) zurückgeführt wird.

7. Verfahren nach Anspruch 6,
**dadurch gekennzeichnet, dass** das Warnsignal (29) vorzeitig, vor dem tatsächlichen Herausfliegen des Flugzeugs (A) aus dem Einsatzkorridor (C2), abgegeben wird.

8. Verfahren nach Anspruch 7,
**dadurch gekennzeichnet, dass** die vorzeitige Abgabe des Warnsignals (29) bei einem Herausfliegen aus dem Einsatzkorridor (C2), das einer übermäßigen lateralen Abweichung bezogen auf die laterale Flugbahn (TL) entspricht, Folgendes berücksichtigt:
- die Kursabweichung des Flugzeugs (A) bezogen auf die laterale Flugbahn (TL),
- den Wert der horizontalen Beschleunigung des Flugzeugs (A), die auf eine senkrecht zur lateralen Flugbahn (TL) verlaufende Achse projiziert wird,
- die auf diese Achse projizierte horizontale Geschwindigkeit des Flugzeugs (A).

9. Verfahren nach Anspruch 7 oder 8,
**dadurch gekennzeichnet, dass** die vorzeitige Abgabe des Warnsignals (29) bei einem Herausfliegen aus dem Einsatzkorridor (C2), das einer übermäßigen vertikalen Abweichung bezogen auf die vertikale Flugbahn (TV) entspricht, Folgendes berücksichtigt:
- die Abweichung der Steigung des Flugzeugs (A) bezogen auf die Steigung der vertikalen Flugbahn (TV),
- den Wert der vertikalen Beschleunigung des Flugzeugs (A), die auf eine senkrecht zur vertikalen Flugbahn (TV) verlaufende Achse projiziert wird,
- die auf diese Achse projizierte vertikale Geschwindigkeit des Flugzeugs (A).

10. Vorrichtung zur Sicherung eines Tiefflugs eines Flugzeugs, wobei die Vorrichtung (1) Folgendes umfasst:
- erste Mittel (3) zum Bestimmen einer Flugbahn (TO), die eine laterale Flugbahn (TL) und eine vertikale Flugbahn (TV) umfasst,
- zweite Mittel (9) zum Bestimmen eines von jeglichem Hindernis freien Sicherheitskorridors (C1), der beidseits der lateralen Flugbahn (TL) begrenzt ist,
- Führungsmittel (MG) zum Führen des Flugzeugs (A) entlang der Flugbahn (TO), die außerdem Navigationsmittel umfassen,
**dadurch gekennzeichnet, dass** sie zusätzlich dritte Mittel (12) umfasst, um jegliches Herausfliegen des Flugzeugs (A) aus dem Sicherheitskorridor (C1) während seiner Führung entlang der Flugbahn (TO) zu vermeiden und **dadurch**, dass die dritten Mittel (12) Mittel (16) zum Bestimmen eines Einsatzkorridors (C2) umfassen, der ein um die Flugbahn (TO) herum definiertes Volumen für normale Manöver des Flugzeugs (A) sowohl in einer vertikalen Ebene, als auch in einer horizontalen Ebene begrenzt und der derart bestimmt ist, dass ein Herausfliegen des Flugzeugs (A) aus dem Einsatzkorridor (C2) vor einem Herausfliegen des Flugzeugs (A) aus dem Sicherheitskorridor (C1) durch ein Steuern des Flugzeugs (A) kompensierbar ist.

11. Vorrichtung nach Anspruch 10,
**dadurch gekennzeichnet, dass** die dritten Mittel (12) außerdem Folgendes umfassen:
- Mittel (18), um zu verifizieren, dass das Flugzeug (A) sich innerhalb des Einsatzkorridors (C2) befindet, während es entlang der Flugbahn (TO) geführt wird,
- Mittel (22), um gegebenenfalls ein vor dem Herausfliegen des Flugzeugs (A) aus dem Einsatzkorridor (C2) warnendes Signal (29) abzugeben und
- Steuerungsmittel (24), die es ermöglichen, bei Abgabe eines Warnsignals (29) das Flugzeug (A) in das Innere des Einsatzkorridors (C2) zurückzuführen.

12. Flugzeug,
**dadurch gekennzeichnet, dass** es eine Vorrichtung (1) wie die unter Anspruch 10 oder 11 spezifizierte aufweist.

13. Flugzeug,
**dadurch gekennzeichnet, dass** es eine Vorrichtung (1) aufweist, die geeignet ist, das unter einem der Ansprüche 1 bis 9 spezifizierte Verfahren auszuführen.
